# EUROPEAN PATENT SPECIFICATION

(11) **EP 2 928 976 B1**
(45) Date of publication and mention of the grant of the patent: **30.08.2017**
(21) Application number: 13811337.8
(22) Date of filing: 10.12.2013
(51) Int. Cl.: C09J 131/02, C09J 133/08, C09J 193/04, C08L 33/08, C08L 33/02, C09J 7/02

(54) **RF ACTIVATABLE ADHESIVES AND APPLICATIONS THEREOF**
RADIOFREQUENZ-AKTIVIERBARE KLEBSTOFFE UND ANWENDUNGEN DAVON
RADIOFRÉQUENCE ADHESIFS ET LEURS APPLICATIONS ACTIVABLES

(30) Priority: 10.12.2012 US 201261735257 P
(43) Date of publication of application: 14.10.2015
(73) Proprietor: Avery Dennison Corporation, Pasadena, CA 91103 (US)
(72) Inventor: LEISNER, Michael, T., Bellefonte, PA 16823 (US)
(74) Representative: Müller-Boré & Partner Patentanwälte PartG mbB
(86) International application number: PCT/US2013/074000
(87) International publication number: WO 2014/093273

(56) References cited:
- EP-A2- 1 548 081
- WO-A1-2009/023537
- WO-A2-2011/037732
- US-B2- 6 600 142

## Description

### FIELD

The present subject matter generally relates to adhesives and labels. More specifically, the subject matter relates to activatable adhesives and activation of label adhesives using radiation and temperature changes.

### BACKGROUND

Traditional pressure sensitive labels are supplied to the user affixed to a release liner. These release liners are typically silicone coated, and, as such, are not usable as sources for recycled paper. In an effort to reduce cost, improve efficiencies, and reduce environmental impact, consumer demand for labels without liners has increased in recent years. The most common forms of these labels are "linerless labels" and "activatable labels".

"Linerless labels" have a sticky side and a release-coated side so they can be wound upon themselves into rolls. The use of these linerless labels requires either preprinting or special printers that are configured to print on release coasting. The equipment used to manipulate linerless labels includes special rollers and platens that are configured to contact the sticky side of the labels. Despite many improvements in this equipment, adhesive buildup still occurs in various sections of the equipment. Because of these shortcomings, and also the high price of the final sticky "linerless" product, these linerless labels have not received wide customer acceptance.

"Activatable labels" are supplied to the end user in a non-tacky state, and then the labels are activated, i.e., the label's adhesive is activated, to a tacky state just prior to application to the intended object. Most often, activatable labels are printed with indicia prior to activation. Known activation schemes include the use of ultraviolet ("UV) energy to heat the adhesive (see U.S. Patent 6,492,019 to Shipston et al.), corona treatment to activate the surface (see U.S Patent 6,326,450 to Shipston et al.), radiant heat to warm the adhesive (see U.S. Patent 6,500,536 to Yamada et al.), moisture to activate a rewettable adhesive (see U.S. Patent 6,803,100 to Hintz et al.), microencapsulating an activator material, which can then be crushed to allow the activator to mix with the rest of the formulation and activate the adhesive (see U.S. Patent 7,026,047 to Krolzigl. overcoating the adhesive with a detackifier layer, which is later removed by heat or mechanical means (see U.S. Patent 5,569,515 to Rice et al.),and ultrasound energy to activate the adhesive (see U.S. Patent 5,702,771 to Shipston et al.).

By far, the most common activation scheme utilizes heat activation, i.e., the activation of the label using heat. For heat activation, various techniques have been proposed. These include the use of the following: heated drums or rollers (see U.S. Patent Nos. 5,749,990 and 5,480,502 to Rello et al.), direct contact with the heating element (see U.S. Patent Nos. 6,388,692 to lwata et al, and 6,501,495 to lchikawa et al.), microwave energy (see U.S. Patent No. 3,461,014 to James), heated belts in contact with the adhesive (see U.S. Patent Nos. 4,468,274 to Adachi and 6,031,553 to Nagamoto et al.), and infrared ("IR") and near infrared radiation ("NIR") (see U.S. Patent Nos. 3,247,041 to Henderson and 4,156,626 to Souder, and U.S. 2012/0216951 assigned to the present applicant).

In addition, general methods for heating using radio frequency ("RF") energy, inductive heat, radiant heat, and visible light also are well known and could be applied to this list of activation methods. These techniques have all proven useful at low-speed operations, but as application speeds increase, these methods all suffer in that the exposure times of the labels to the heating elements must somehow be increased in order to gain sufficient heating, Elther the size or the cost of the units capable of supplying sufficient heating has thwarted high-speed applications,

One way to overcome the need for larger or longer heaters is to Increase the ability of the adhesive to absorb the energy from the heating devices, U.S. Patent Nos, 4,156,626 to Souder and 6,043,190 to Ichikawa et a!., and U.S. Patent Application Publication Numbers 2003/0041963 and 2004/0166309 to Gong et al, all describe the use of NIR absorbers to increase the energy absorbance by adhesives. Hence, the use of NIR absorbers and high-intensity NIR lamps might appear to be a viable route for activating the adhesive. Although satisfactory in many respects, disadvantages exist involving currently known activatable labels, labeling systems, and related methods.

For example, conventional adhesives including metallic particles, metallized inks, high concentrations of carbon black or anything electrically conductive cannot be used due to the likelihood of fire or arcing/short circuit from RF activation,

Hence, there remains a need for a label without a liner and a related method of high-speed activation of the label. The present subject matter satisfies these needs.

### SUMMARY

The present invention provide a RF activatable polymer blend comprising: from 45 to 60 wt% of a base polymer comprising: from 25 to 45 wt% of 2-ethyl hexyl acrylate; from 45 to 75 wt% of methyl methacrylate; from 1 to 5 wt% of methacrylic acid; from 0.1 to 3 wt% of acrylic acid; wherein the wt% add to 100 wt%; from 15 to 40 wt% of a polyethylene glycol plasticizer having a molecular weight of 100-1500 Daltons, wherein the molecular weight is determined by gel permeation chromatography; and from 15 to 25 wt% of an aqueous tackifier dispersion.

An exemplary embodiment of the present subject matter is an aqueous adhesive composition which is activatable by exposure to electromagnetic radiation and which exhibits pressure sensitive adhesive properties once activated by electromagnetic radiation or by heating. In particular, an embodiment of the subject matter is a RF active polymer blend as specified in claim 1.

In another embodiment, the subject matter involves: a RF active polymer blend comprising (a) 45-60 wt% of a base polymer comprising (i) 25-45 wt% of 2-ethyl hexyl acrylate, (ii) 45-75 wt% of methyl methacrylate, (iii) 1-5 wt% of methacrylic acid, and (iv) 0.1-3 wt% of acrylic acid, (b) 15-40 wt% of a polyethylene glycol having a molecular weight of 100-1500, and (c) 15-25 wt% of a waterborne tackifier dispersion.

An exemplary embodiment of the subject matter is an adhesive composition comprising (i) an emulsion base copolymer exhibiting a glass transition temperature Tg above 25°C and a weight average molecular weight within a range of from about 10,000 Daltons to about 500,000 Daltons, (iS) a plasticizer for such copolymer exhibiting a melting point below 40 °C, and (iii) a high softening point tackifier.

Another exemplary embodiment is an adhesive that includes a plasticizer, a tackifier, and an adhesive base polymer that includes a lower alkyl acrylate such as butyl acrylate, methyl methacrylate, methacrylic acid, and acrylic acid.

Preferably, the adhesives comprise from about 47% to about 55% of an adhesive base polymer, from about 23% to about 33% of a plasticizer, and from about 17% to about 24% of a tackifier.

In another embodiment, the subject matter is a method of activating an RF active adhesive comprising: (a) providing a RF active polymer blend comprising: from 45 to 60 active adhesive comprising: (a) providing a RF active polymer blend comprising: wt% of a base polymer comprising: from 25 to 45 wt% of 2-ethyl hexyl acrylate; from 45 to 75 wt% of methyl methacrylate; from 1 to 5 wt% of methacrylic acid; from 0.1 to 3 wt% of acrylic acid; wherein the wt% add to 100 wt%; from 15 to 40 wt% of a polyethylene glycol plasticizer having a molecular weight of 100-1500 Daltons, wherein the molecular weight is determined by gel permeation chromatography; and from 15 to 25 wt% of an aqueous tackifier dispersion applying the RF active polymer blend to a generally planar substrate, (v) providing an RF generator including at least two generally linear electrodes, and (vi) orienting the generally planar substrate in an RF energy field produced by the RF generator. The generally planar substrate may be oriented anywhere on a continuum from generally parallel to generally perpendicular to the at least two generally linear electrodes. Any RF active adhesive disclosed herein may be activated by the method in this paragraph.

In other more detailed features of the subject matter, the adhesive is white. Also, in other features, the adhesive does not include and so, is free from carbon black, graphite, an ink, a dye, a pigment, and/or a colorant, In addition, the plasticizer can be polyethylene glycol having a molecular weight of from about 100 to about 1500 Daltons, preferably from about 150 to about 1300, more preferably from about 200 to about 1000. In addition, the tackifier can be Snowtack^{®} 775A, which is a high softening point acid grade tackifier (rosin acid) giving higher cohesive strength when formulated with acrylic and SBR PSA polymers, commercially available from Lawter Company or Momentive Performance Materials; or Aquatack^{®} 6025, which is a rosin, ester commercially available from Arizona Chemicals.

In other more detailed features of the subject matter, the plasticizer is configured to melt upon and/or after exposure to energy. Also, the adhesive can be configured to be activated by exposure to energy for less than one second. In addition, the adhesive can be configured to be activated by exposure to energy for less than 0.3 second.

In other more detailed features of the subject matter, the energy is NIR, short IR energy, Mid Wave IR energy, IR energy, microwave energy, RF energy, inductive heat energy, visible light energy, radiant heat energy, or UV energy, in addition, the energy can have a peak wavelength from approximately 1.2 micrometers to approximately 2.5 micrometers. In certain embodiments, RF energy is used

Another exemplary embodiment is a label that includes a facestock layer and an adhesive layer that is coupled to the facestock layer. The adhesive layer includes a plasticizer, a tackifier, and an adhesive base polymer that includes2-ethyl hexyl acrylate, methyl methacrylate, methacrylic acid, and acrylic acid.

in other more detailed features of the subject matter, the label is configured to be exposed to radiant energy, the radiant energy has a wavelength and an intensity that results in the adhesive layer becoming tacky after exposure to the radiant energy, and the facestock layer is not discolored after the exposure of the label to the radiant energy. In other more detailed features of the subject matter, the label is configured to be applied to an item, and to be repositioned for approximately one minute after the label is applied to the item. Also, the adhesive layer can be activatable, have a tackiness, and be configured to be applied to an item, so that after the label is applied to the item, the adhesive layer's tackiness prevents the label from inadvertently being removed from the item. In addition, the label can be configured to be applied to an item, and after the label is applied to the item, the label permanently bonds with the item after approximately two hours.

Another exemplary embodiment is a label assembly comprising a facestock layer and a heat activatable adhesive layer, and a functional coating layer disposed between the adhesive layer and the facestock layer.

Another exemplary embodiment is a label that includes a facestock layer, an adhesive layer, and a reflective layer that is coupled between the facestock layer and the adhesive layer. The reflective layer is non-metallic

Another exemplary embodiment is a label that includes a facestock layer, an adhesive layer, and a barrier layer disposed between he facestock layer and the adhesive layer.

And, another exemplary embodiment is a label that includes a facestock layer, an adhesive layer, and a primer layer disposed between the facestock layer and the adhesive layer.

In other more detailed features of the subject matter, the adhesive layer of the various label assemblies includes a plasticizer, a tackifier, and an adhesive base polymer including 2-ethyl acrylate, methyl methacrylate, methacrylic acid, and acrylic scid.

In other more detailed features of the subject matter, the label is configured to be exposed to a radiant energy, the radiant energy has a wavelength and an intensity that results in the adhesive layer becoming tacky after exposure to the radiant energy, and the facestock layer is not discolored after the exposure of the label to the radiant energy. Also, the facestock layer can have a bottom surface, and the label can include a reflective layer that is made of a material that is applied as a coating to the bottom surface of the facestock layer, Furthermore, the reflective layer can have a thickness of not greater than one micron. The reflective layer is non-metallic,

In another embodiment, the subject matter can be used in home decorating applications such as wall paper or other graphics. An adhesive layer is applied to a facestock, such as wallpaper, by conventional methods and rewound on itself, The adhesive coating can be ridged or otherwise patterned or embossed to allow for air egress during end-use application. The adhesives composition will be significantly non-tacky so that there will be no adhesive residue left on the printed side, nor will there be any damage/ distortion to the printing upon unroping. The pre-coated wallpaper will elimirnate the need for wallpaper "paste" altogether and will give the end-user infinite repositionability while aligning patterns along seams. Once properly aligned, a very short duration of exposure (<1 second) to RF energy will cause the adhesive to heat, flow and bond the wallpaper to the wall. Additionally, subsequent RF activation will cause the adhesive to again heat and flow, allowing the end-user to easily remove the wallpaper at a later time. This exemplary process will be applicable to any type of graphics application.

For linerless labels, an adhesive layer is applled to a facestock, i.e., paper or film, by conventionl methods and rewound on itself. The adhesive composition will be significantly non-tacky so that there will be no adhesive residue left on the printed side, nor will there be any damage/distortion to the printing upon unwinding. Downstream, rolls can be converted into labels and activated by a short duration of exposure (<1 second) to RF energy just prior to application of the label. This type of process could eliminate the need for a release liner that can account for a large portion of product cost.

in other more detailed features of the subject matter, the label is configured to be exposed to a radiant energy, the radiant energy has a wavelength and an intensity that results in the adhesive layer becoming tacky after exposure to the radiant energy, and the facestock layer is not discolored after the exposure of the label to the radiant energy. Also, the facestock layer can have a bottom surface, and the label can include a barrier layer that is made of a material that is applied as a coating to the bottom surface of the facestock layer. In addition, the material of the barrier layer is selected so as to prevent or at least significantly reduce discoloration of the facestock layer,

Another exemplary embodiment is a system that is configured to facilitate the application of an activatable label to an item. The system includes an energy source that is configured to emit energy and one or more actuators that are configured to receive the activatable label, transport the activatable label through the emitted energy, and transport the activatable label to a position where the activatable label is applied to the item. The activatable label includes an adhesive having a plasticizer, a tackifier, and an adhesive base polymer that includes 2-ethyl hexyl acrylate, methyl methacrylate, methacrylic acid, and acrylic acid.

Another exemplary embodiment is a system that is configured to facilitate the application of an activatable label to an item. The system includes an energy source that is configured to emit energy, a printer that is configured to print indicia on the activatable label, and one or more actuators that are configured to receive the activatable label, transport the activatable label past the printer that then prints the indicia on the activatable label, transport the activatable label through the emitted energy, and transport the activatable label to a position where the activatable label is applied to the item. The activatable label includes an adhesive having a plasticizer, a tackifier, and an adhesive base polymer that includes 2-ethylhexyl acrylate, methyl methacrylate, methacrylic acid, and acrylic acid.

In other more detailed features of the subject matter, the one or more actuators is a blower system, a conveyor belt, a paddle, a carrier sheet, a plunger, a vacuum drum, a roller, a vacuum belt, or a vacuum head. Also, the item to receive the label can be a bottle, a can, a container, a vessel, a bag, a pouch, an envelope, a parcel, or a box. In addition, the activatable label can be one of a stack of precut activatable labels.

An exemplary method according to the subject matter is a method for applying a label with an activatable adhesive to an item. The method includes providing a label that has a first surface that is coated with an activatable adhesive, the adhesive including a plasticizer, a tackifier, and an adhesive base polymer including 2-ethylhexyl acrylate, methyl methacrylate, methacrylic acid, and acrylic add. The method also includes providing the item that has a second surface, providing a source of energy that is configured to output radiant energy, exposing the first surface of the label to the radiant energy that is output from the source of energy so the first surface of the label becomes tacky, and placing the first surface of the label in contact with the second surface of the item.

In other more detailed features of the subject matter, the label is pre-printed with indicia. Also, the method can further include providing a printer that is configured to print an image on the label, and printing the image on the label before the step of exposing the label to the radiant energy. Also the method includes providing a cutter that is configured to cut the dry label to a desired length before the activation stage, in addition, the label can include a facestock layer and an adhesive layer. The adhesive layer includes the adhesive base polymer, the plasticizer, and the tackifier, and the facestock layer is not discolored after the exposure of the label to the radiant energy.

In other more detailed features of the subject matter, the step of providing the label includes providing a plurality of labels, the step of providing an item includes providing a plurality of items, the step of exposing the label includes exposing at least one of the plurality of the label to the radiant energy, and the step of placing the label in contact with the item includes placing one of the plurality of labels in contact with one of the plurality of items at a rate greater than approximately 60 labels per minute. Also, the step of placing the label in contact with the item includes placing one of the plurality of labels in contact with one of the plurality of items at a rate of less than or equal to approximately 1,000 labels per minute.

Another exemplary method according to the subject matter is a method for activating a label. The method includes providing a label having a first surface that is coated with an activatable adhesive, the activatable adhesive includes a plasticizer, a tackifier, and an adhesive base polymer including 2-ethylhexyl acrylate, methyl methacrylate, methacrylic acid, and acrylic acid. The method also includes providing a source of energy that is configured to output radiant energy, and exposing the label to the radiant energy that is output from the source of energy so the first surface of the label becomes tacky.

in another exemplary embodiment, a system is provided for printing and applying labels to artides. The system comprises a printer unit, a thermal activation unit downstream of the printer unit, and an applicator unit downstream of the thermal activation unit. The thermal activation unit includes a label transport assembly and one or more emitters that are configured to emit radiation to labels. In certain aspects of this system, unique sensor arrangements are utilized to assess whether label degradation condition(s) are occurring. And, optional quartz glass members are used to improve safety and operability of the system.

### BRIEF DESCRIPTION OF THE DRAWINGS

These, as well as other features, aspects, and advantages of this subject matter, will be more completely understood and appreciated by referring to the following more detailed description of the exemplary embodiments of the subject matter in conjunction with the accompanying drawings,

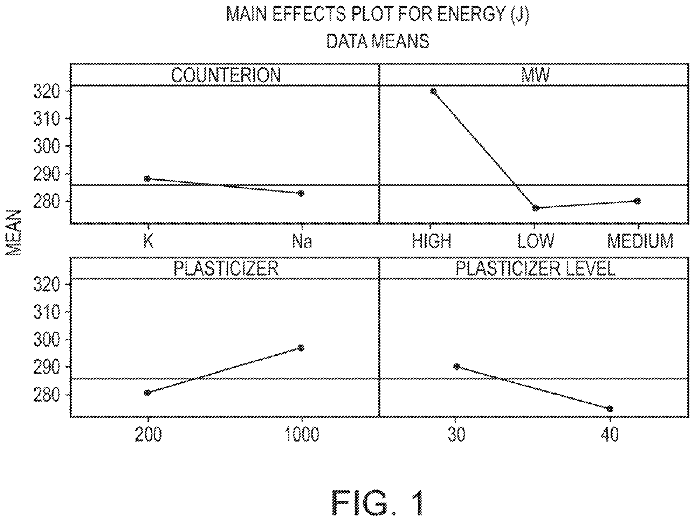

Figure 1 is a summary of the effects of counter ion, molecular weight, plasticizer level and plasticizer type on energy required to effect a deep fiber tear bond.

Unless otherwise indicated, the illustrations in the above figure are not necessarily drawn to scale.

### DETAILED DESCRIPTION

### Adhesives

Generally, in accordance with the present subject matter, various activatable adhesives or adhesive systems are provided as described in greater detail herein. However, it will be appreciated that in no way is the subject matter limited to the use of the particular adhesive systems described herein. In many embodiments, the adhesive systems utilize the particular adhesive base polymers described herein. The adhesive systems general comprise (i) an adhesive base polymer, (ii) a plasticizer, and (iii) a tackifier. Typical and particular weight percent concentrations for each of these components are set forth below in Table 1. It will be appreciated that the noted weight percent concentrations are based upon the total weight of components (i) - (iii). Thus, it is contemplated and expected that the adhesives systems may include additional components and additives in addition to components (i) - (iii) listed below in Table 1.

**TABLE 1 - Typical and Particular Concentrations of Components in Adhesive Systems**

| Component | Typical Concentration | Particular Concentration | Alternate Concentration | Alternate Concentration |
|---|---|---|---|---|
| Adhesive Polymer Base | 45% -65% | 45% - 60% | 46% - 58% | 47% - 57% |
| Plasticizer | 5% - 50% | 15% - 40% | 20% - 37% | 24% - 35% |
| Tackifier | 5% - 40% | 15% - 25% | 17% - 23% | 18% - 22% |

The adhesive systems described herein general comprise an adhesive base polymer (described in greater detail herein), a plasticizer, and a solid tackifier which, when blended together, form a blend which preferably exhibits a Tg above room temperature, and hence minimal flow and tack before activation. The physical states of the adhesive material can be switched between solid and non-solid by altering the temperature. The open time of the adhesive can be controlled by adjusting the ratio of the components, i.e. the adhesive polymer base, the plasticizer, and the tackifier. In certain embodiments, the activation temperature is preferably within the range of from about 50 °C to about 120°C. However, it will be understood that the subject matter is not limited to adhesive systems exhibiting activation temperatures within this range.

At the switching temperature of the adhesive, the properties of adhesion and viscosity markedly change. Therefore, a pressure sensitive adhesive system can be thermally switched from "off" to "on" by using these strategies described herein. If such adhesive system is then coated on a facestock at a temperature below the designed switch temperature, the material is in its non-sticky solid state. Thus, the label construction can be wound in a roll form. During the application process, the temperature is increased to the switching temperature so that the material will change to a non-solid state and then exhibit its pressure sensitive adhesive properties, which allow the label to be adhered to a substrate as desired as a result of increased adhesion properties. If the substrate exhibits a porous surface, certain embodiment adhesive systems will flow into the pores and "stick" very well, as a result of the interlocking effect even when the temperature is reduced below that of the switching temperature, of the adhesive.

The formulation shown in Table 2, illustrates several exemplary adhesive formulations wherein polyethylene glycol is used as a plasticizer.

**Table 2 - exemplary Adhesive Formulations**

| Formulation | Base Polymer | Plasticizer | Tackifier |
|---|---|---|---|
| Blend F | 54,2%ML2.101 polymer | 24.1% PEG 200 | 21.7% Snowtack 775A |
| Blend G | 54.2%ML2-101 polymer | 24.1% PEG 200 | 21.7% Snowtack 775A |
| Blend K | 54.2%ML2-101 polymer | 24.1% PEG 200 | 21.7% Aquatack 6025 |
| Blend L | 54.3%ML2-101 polymer | 24.1% PEG 200 | 21.7% Aquatack 6025 |
| Blend #1 | 54.5% ML2-127 polymer | 23.4% PEG 200 | 22.1% Snowtack 775A |
| Blend #2 | 54.5% ML2-127 polymer | 23.4% PEG 200 | 21.7% Snowtack 775A |
| Blend #3 | 48.0% ML2-127 polymer | 32.7% PEG 200 | 19.4% Snowtack 775A |
| Blend #4 | 48.0% ML2-127 polymer | 32.7% PEG 200 | 19.4% Snowtack 775A |
| Blend #7 | 54.5% ML2-127 polymer | 23.4% PEG 1000 | 22.1% Snowtack 775A |
| Blend #8 | 54.5% ML2-127 polymer | 23.4% PEG 1000 | 22.1% Snowtack 775A |
| Blend #13 | 54.5% ML2-130 polymer | 23.4% PEG 200 | 22.1% Snowtack 775A |
| Blend #14 | 54.5% ML2-130 polymer | 23.4% PEG 200 | 22.1% Snowtack 775A |
| Blend #15 | 48.0% ML2-130 polymer | 32.7% PEG 200 | 19.4% Snowtack 775A |
| Blend #16 | 48.0% ML2-130 polymer | 32.7% PEG 200 | 19.4% Snowtack 775a |
| Blend #19 | 54.5% ML2-130 polymer | 23.4% PEG 1000 | 22.1% Snowtack 775A |
| Blend #20 | 54.5% ML2-130 polymer | 23.4% PEG 1000 | 22.1% Snowtack 775A |

The base polymers (ML2-1xx) have identical monomer composition with varying level of chain transfer agent to vary the molecular weight. The base polymers include chain transfer agent in the following amounts: The ML2-101 polymer includes no chain transfer agent. The ML2-127 polymer includes 0.1 wt% chain transfer agent. The ML-130 polymer includes 0.5 wt% chain transfer agent. The chain transfer agent is n-DDM, which is n-dodecyl mercaptan.

The base composition is (a) 35 wt% 2-ethyl hexyl acrylate, (b) 62 wt% methyl methacrylate, (c) 2 wt% methacrylic acid, and (d) 1 wt% acrylic acid.

The present subject matter provides a RF active polymer blend comprising (a) 45-60 wt% of a base polymer comprising (i) 25-45 wt% of 2-ethyl hexyl acrylate, (ii) 45-75 wt% of methyl methacrylate, (iii) 1-5 wt% of methacrylic acid, and (iv) 0.1-3 wt% of acrylic acid, (b) 15-40 wt%, and particularly 20-35 wt% of a polyethylene glycol plasticizer having a molecular weight of 100-1500, and (c) 15-25 wt% of a waterborne tackifier dispersion.

In one embodiment, the subject matter provides a RF active polymer blend comprising (a) 45-65 wt% of an acrylic polymer, (b) 5-50 wt%, particularly 28-35 wt%, of a glycol plasticizer, and (c) 5-40 wt%, particularly 10 - 35 wt%, of a waterborne tackifier dispersion.

The acrylic polymer in the RF active polymer blend comprises at least one (meth)acrylate based monomer selected from the group consisting of 2-ethylhexyl acrylate, 2-ethylhexyl methacrylate, butyl acrylate, butyl methacrylate, ethyl acrylate, ethyl methacrylate, methyl acrylate, methyl methacrylate, acrylic acid, methacrylic acid, styrene, vinyl acetate, vinyl pyrrolidone, hydroxyethyl acrylate, hydroxypropyl acrylate, isobutyl acrylate, isobutyl methacrylate, tert-butyl acrylate, tertbutyl methacrylate, isobornyl acrylate, isobornyl methacrylate, glycidyl methacrylate, and combinations thereof. The term (meth)acrylate means acrylate and/or methacrylate as known in the art,

The polymer may have glass transition temperature (Tg) of from -10 to 50°C, particularly 0 to 40°C, more particularly 5 to 35°C, The polymer may include an acid-functional monomer in an amount of 0.1-20 wt%, particuiarly 0.5-10 wt%, more particularly 1-6 wt%. The acid groups may be neutralized with a non-fugitive monovalent counterion such as Na⁺ or K⁺. The plasticizer may be a water soluble or water borne plasticizer such as glycerol, ethylene glycol, propylene glycol, and short chain polyols having a molecular weight of up to 600 grams per mole.

In one embodiment, the waterborne tackifier is selected from the group consisting of hydrocarbons, rosin acids, rosin esters, polyterpenes, terpene-phenolics, alkylphenolics and combinations thereof.

In an alternate embodiments, the waterborne tackifier is selected from the group consisting of abletic type rosins, glycerol esters of abletic type rosins, pentaerythritol esters of abletic type rosins, methyl esters of abletic type rosins, pimaric type rosin, glycerol esters of pimaric type rosin, pentaerythritol ester of pimaric type rosins, methyl esters of pimaric type rosins, tall oil glycerol esters of tall oil rosins, pentaerythritol esters of tall oil resins, methyl esters of tall oil rosins, fully or partially hydrogenated versions of all of the foregoing, and blends thereof.

The present subject matter also provides various embodiment adhesive polymer bases comprising (i) one or more lower alkyl acrylates, (ii) methyl methacrylate (MMA), (iii) methacrylic acid (MAA), (v) acrylic acid (AA), one or more multifunctional monomers, and one or more chain transfer agents. In one embodiment, typical and particular concentrations for each of these components are set forth below in Table 3 as follows. The weight percent concentrations listed in Table 3 are based upon the total weight of the adhesive polymer base. It will be understood that the various adhesive base polymers described herein are merely representative in nature. Although generally constituting preferred embodiments of the subject matter, in no way is the subject matter limited to the use of the particular adhesive base polymers described herein.

**TABLE 3 - Typical and Particular Concentrations of Components in Adhesive Polymer Bases**

| Component | Typical Concentration | Particular Concentration | Alternate Concentration |
|---|---|---|---|
| tower Alkyl Acrylate | 25% - 45% | 30 - 40% | 38% - 40% |
| MMA | 45% - 75% | 50 - 65% | 60% - 65% |
| MAA | 1% - 5% | 1.5 - 4% | 1% - 3% |
| AA | 0.1% - 3% | 0.5 - 2% | 0.1% - 2% |
| chain Transfer Agent | 0 - 5% | 0 - 1% | 0 - 0.5% |

A wide array of lower alkyl acrylates can be used singly or in combination for component (i) in the particular embodiment adhesive polymer base. For example, butyl acrylate, iso-bornyl acrylate, and 2-ethylhexyl acrylate could be used. However, 2-ethylhexyl acrylate and butyl acrylate are generally used with 2-ethylhexyl acrylate being suitable for many embodiments.

Similarly, for component (II), methyl methacrylate (MMA) may be used. However, it will be appreciated that other analogues and functionally equivalent monomers could be used in conjunction with or instead of MMA.

A particular monomer for component (iii) is methacrylic acid (MAA). However, it will be appreciated that the subject matter includes the use of other equivalent monomers in conjunction with or instead of MAA.

And, although acrylic add (AA) is noted for use as component (Iv), it will be understood that the subject matter includes the use of other equivalent monomers.

Chain transfer agents when used in forming the adhesives, are typically used at concentrations of from about to to about 5.0%, and particularly from about 1,0% to about 4.0% (percentages are based upon the total weight of monomers). Representative examples of suitable chain transfer agents include, but are not limited to n-dodecyl mercaptan (n-DDM), tert-nonyl mercaptan, isooctyl 3-mercaptopropionate, and combinations thereof. It will be understood that in no way is the subject matter limited to these chain transfer agents. Instead, a wide array of chain transfer agents can be used. Suitable chain transfer agents are available commercially such as from Sigma Aldrich of St. Louis, MO. Most particularly, the adhesive polymer bases include bath (I) one or more multifunctional monomer agents and (II) one or more chain transfer agents.

A wide array of optional multifunctional monomers or multifunctional monomer agents can be used in the present subject matter. The multifunctional monomers can be used to achieve cross-linking of the base polymer. Representative examples of such muitifunctional monomers indude, but are not limited to, functional monomers, trifunctional monomers, and multifunctional monomers having more than three active functional sites. Particular examples of difunctional monomers include, but are not limited to 1,4 butanediol diacrylate, polyethylene glycol (200) diacrylate, and combinations thereof. Another particular difunctional monomer is ethylene glycol dimethacrylate (EGDMA). Particular examples of trifunctional monomers include, but are not limited to ethoxylated (15) trimethylolpropane triacrylate, propoxylated (3) glycerol triacrylate, and combinations thereof. Particular examples of multifunctional monomers having more than three active functional sites include, but are not limited to, ethoxylated pentaerythritol tetraacrylate, dipentaerythritol, pentaacrylates, and combinations thereof. These and numerous other suitable multifunctional monomers are commercially available from various suppliers such as Sartomer of Exton, PA. Typical concentrations of multifunctional monomers range from about 0 to about 5.0%, with from about 0.5% to about 2,5% being used in certain embodiments, and from about 1.5% to about 2.0% being used in particular embodiments.

In one embodiment, a particular adhesive polymer base composition is set forth below in Table 3A.

**TABLE 3A-Concentrations of Components in an Adhesive Polymer Base**

| Component | Particular Concentration | Alternate Concentration |
|---|---|---|
| 2-ethylhexyl acrylate | 30 -40% | 32 -35% |
| MMA | 50 - 65% | 62 - 65% |
| MAA | 1.5 - 4% | 2 - 3% |
| AA | 0.5 - 2% | 1 - 2% |
| n-DDM | 0 - 1% | 0.05 - 0,5% |

The present subject matter provides a wide array of adhesives having unique characteristics that enable the adhesives to be used in numerous applications. One feature of the adhesives relates to the relatively short time period required for activating the adhesive, i,e, selectively changing the adhesive from a non-tacky state to a tacky state. Fast activation times enable the adhesive to be used in high speed labeling operations. Particularly, the adhesives of the present subject matter can be activated within a time period of about 0.3 seconds and generally activated in a time period of less than 1 second, and more typically, less than 0.5 seconds. This time period is referred to herein as the adhesives "activation time."

As previously described herein, the adhesives, once activated, remain in their activated state long enough to at least allow application of a label carrying the adhesive to an item or receiving substrate before the adhesive loses its tackiness. This characteristic is described herein as the "open time" of the adhesive. The adhesives of the subject matter can have a wide variety of open times. The adhesives of the subject matter may exhibit an open time of from about 0.1 second to 10 minutes or longer. For certain applications, the adhesives can be tailored to exhibit relatively long open times, such as up to 72 hours or longer. Typically, the adhesives of the subject matter exhibit open times of from 0.1 seconds to 5 seconds, in certain embodiments about 0.5-4 seconds, more particularly about 1 to about 3 seconds.

Once the adhesives of the subject matter are activated, i.e. while in their "open" and tacky state, the adhesives exhibit relatively high tackiness. For example, the adhesives exhibit an initial peak tack to a substrate such as cardboard or steel of it least about 1.0 Newton, and preferably at least about 1,25Newtons. As described in conjunction with the examples presented herein, typically, certain embodiment adhesives exhibit initial peak tack values in the range of from 1.0Newton to 2,0Newtons. These tack values are measured using SPAT, which is described in detail herein. These tack values are with regard to the substrates as described herein. However, it will be appreciated that the present subject matter is not Smiled to adhesives that exhibit these tack values in association with the substrates described herein. That is, it is contemplated that the subject matter includes adhesives exhibiting these tack values in association with other substrates and substrate material not expressly described herein. Furthermore, generally that upon activation of the adhesive, the tackifier softens and is in a flowable state,

In addition, in certain embodiments, the adhesives of the present subject matter are generally clear after activation to allow the passage of light without any detrimental absorbance. In certain embodiments the adhesives, once activated, remain in a clear or at least substantially clear state for relatively long time periods and particularly for at least 1 year, and more particularly longer than 1 year.

The present subject matter adhesives, e.g. those for linerless label applications, can be solvent based, water based such as emulsion adhesives, hot melt, or UV curable adhesives, in which an adhesive base polymer is blended with other adhesive components such as a solid plasticizer, and/or a solid tackifier to yield a linerless adhesive that is heat activatable, and particularly, a light activatable adhesive such as RF activatable adhesive formulation.

Additional aspects of the various embodiment adhesives are as follows. A typical range of average molecular weight of the adhesive base polymer is from about 10,000 Daltons to about 500,000 Daltons. In certain embodiments, the average molecular weight of the adhesive base polymer is from about 10,000 Daltons to about 150,000 Daltons. A particular range is from about 15,000 Daltons to about 100,000 Daltons, with a range of from about 20,000 Daltons to about 40,000 Daltons being useful for many embodiments. A lower molecular weight base polymer is used in many embodiments because such polymer can be activated faster than a corresponding base polymer having a higher molecular weight.

The adhesive base polymers also exhibit certain glass transition temperatures, Tg. Although the Tg of the base polymer depends upon pressure and temperature requirements of the process, and pressure and temperature conditions which the product may encounter, a typical Tg range is from about 20°C to about 100°C. A particular Tg range is from about 55°C to about 80°C. And, a most particular range for the glass transition temperature Tg of the base polymer is from 80°C to 75°C.

in certain embodiments when forming the adhesives, after melting, the plasticizer remains in a liquid or flowable form for an extended period of time. The temperatures at which the plasticizers exist in a liquid or flowable state are typically from room temperature (25 °C) and below.

As a result of the particular formulation and selection of components, many of which have particular properties and characteristics, certain embodiment adhesives remain tacky in a temperature range of from about -10°C to about 50°C and particularly from ambient temperature to about 45°C. The adhesives typically remain tacky for time periods of from about 0.1 seconds to about 2 weeks. However, it will be appreciated that the subject matter is not limited to these particular time periods. For example, adhesives can be formulated which remain tacky for periods longer than 2 weeks. Many of the adhesives exhibit remarkably long open times, i.e. the period of time during which the adhesive is in a tacky state.

in accordance with the present subject matter, it is found that, by controlling various factors including the molecular weight and molecular weight distribution of the base polymer, as well as the level of the multifunctional monomer of the base polymer by using a combination of multifunctional monomer and chain transfer material, a heat switchable adhesive that has superior properties of fast activation, high tack, long open time, and long lasting clarity is obtained. Upon heating, the activatable adhesive behaves as a typical pressure sensitive adhesive, and the property of tack can be maintained for a prolonged period of time, which allows the adhesive material to flow or wet-out on the targeted substrate surface for enhancing the adhesion. Furthermore, the adhesive materials in this subject matter are inherently activatable with RF radiation, which leads to a short activation time for fast line speed.

The base polymers of certain adhesives of the subject matter typically exhibit a polydispersity index of from about 1 to about 20, particularly 2 to about 15, particularly2 to about 10, and more particularly from 2 to 4. The polydispersity index (D) is calculated by Mw/Mn. However, it will be appreciated that the base polymers of the adhesives of the subject matter include polymeric systems exhibiting polydispersities less than 2.0 and greater than 10.0.

### Examples

(1) Samples were coated in lab by applying adhesive formulations to either an ink-jet (U2k) paper label facestock or to wallpaper using a meyer rod to achieve approximately 2 mil dry coat thickness. Samples were dried in lab oven at 120 °C for 5 minutes. U2k is an ink jet paper label facestock commercially available from Avery-Dennison Corporation
(2) Samples were then cut into 1 Inch wide strips along with the paperboard substrate that the coated materials would be bonded to.
(3) Coated samples were mated one at a time with a strip of paperboard and placed into the RF unit for activation. The design of the RF unit is not critical, and conventional units may be used. While both the through RF field (generally perpendicular to the lines of force) and the stray RF field (generally parallel to the lines of force) may be used, in many embodiments it is beneficial to use the stray field. This is the key to the very fast interaction of the adhesive with the RF field. The inventors have discovered that if the through field were utilized, the activation times/energies would be much larger, by as much as an order of magnitude.

Each time a new sample was put into the RF unit, either the duration or power of the RF pulse was varied, resulting in the data of Table 4.

**TABLE 4 -Pressure Sensitive Adhesives of the Subject matter and Selected Properties Thereof**

| Test | Blend | Counterion | Mw | Plasticizer | Plasticizer level | Face stock | Freq (MHz) | Power (W) | Time (ms) | Energy (J) | Open Time (s) | % Fiber Tear (width) | F.T. quality |
|---|---|---|---|---|---|---|---|---|---|---|---|---|---|
| 1-3 | 1 | K | low | 200 | 30 | IJ2K | 60.4 | 800 | 300 | 240 | 0 | 100 | deep |
| 1-5 | 1 | K | low | 200 | 30 | Wallpaper | 60.3 | 800 | 300 | 240 | 0 | 100 | deep |
| 2-8 | 2 | Na | low | 200 | 30 | IJ2K | 60.3 | 800 | 300 | 240 | 0 | 100 | deep |
| 2-10 | 2 | Na | low | 200 | 30 | Wallpaper | 60.3 | 800 | 300 | 240 | 0 | 100 | deep |
| 3-6 | 3 | K | low | 200 | 40 | IJ2K | 60.3 | 800 | 300 | 240 | 0 | 100 | deep |
| 7-2 | 7 | K | low | 1000 | 30 | IJ2K | 60.3 | 800 | 300 | 240 | 0 | 100 | deep |
| 16-1 | 16 | Na | medium | 200 | 40 | IJ2K | 60.3 | 800 | 300 | 240 | 0 | 100 | deep |
| 19-1 | 19 | K | medium | 1000 | 30 | IJ2K | 60.3 | 800 | 300 | 240 | 0 | 100 | deep |
| 20-1 | 20 | Na | medium | 1000 | 30 | IJ2K | 60.3 | 800 | 300 | 240 | 0 | 100 | deep |
| L-1 | L | K | high | 200 | 30 | IJ2K | 60.3 | 800 | 300 | 240 | 0 | 100 | deep |
| L-3 | L | K | high | 200 | 30 | Wallpaper | 60.3 | 800 | 300 | 240 | 0 | 100 | deep |
| 1-4 | 1 | K | low | 200 | 30 | Wallpaper | 60.3 | 500 | 500 | 250 | 0 | 100 | deep |
| 3-1 | 3 | K | low | 200 | 40 | IJ2K | 60.3 | 500 | 500 | 250 | 0 | 100 | deep |
| 2-4 | 2 | Na | low | 200 | 30 | IJ2K | 60.3 | 700 | 400 | 280 | 0 | 100 | deep |
| 3-4 | 3 | K | low | 200 | 40 | IJ2K | 60.3 | 700 | 400 | 280 | 0 | 100 | deep |
| 1-1 | 1 | K | low | 200 | 30 | IJ2K | 60.4 | 600 | 500 | 300 | 0 | 100 | deep |
| 2-2 | 2 | Na | low | 200 | 30 | IJ2K | 60.3 | 600 | 500 | 300 | 0 | 100 | deep |
| 4-2 | 4 | Na | low | 200 | 40 | IJ2K | 60.3 | 800 | 400 | 320 | 0 | 100 | deep |
| 7-1 | 7 | K | low | 1000 | 30 | IJ2K | 60.3 | 800 | 400 | 320 | 0 | 100 | deep |
| 8-3 | 8 | Na | low | 1000 | 30 | IJ2K | 60.3 | 800 | 400 | 320 | 0 | 100 | deep |
| 13-1 | 13 | K | medium | 200 | 30 | IJ2K | 60.3 | 800 | 400 | 320 | 0 | 100 | deep |
| 14-2 | 14 | Na | medium | 200 | 30 | IJ2K | 60.3 | 800 | 400 | 320 | 0 | 100 | deep |
| 15-1 | 15 | K | medium | 200 | 40 | IJ2K | 60.3 | 800 | 400 | 320 | 0 | 100 | deep |
| F-2 | F | K | high | 200 | 30 | IJ2K | 60.3 | 800 | 400 | 320 | 0 | 100 | deep |
| K-1 | K | K | high | 1000 | 30 | IJ2K | 60.3 | 800 | 400 | 320 | 0 | 100 | deep |
| K-4 | K | K | high | 1000 | 30 | Wallpaper | 60.3 | 800 | 400 | 320 | 0 | 100 | deep |
| G-2 | G | K | high | 1000 | 30 | IJ2K | 60.3 | 800 | 500 | 400 | 0 | 100 | deep |
| 3-8 | 3 | K | low | 200 | 40 | IJ2K | 60.3 | 800 | 700 | 560 | 1 | 100 | deep |
| 3-10 | 3 | K | low | 200 | 40 | IJ2K | 60.3 | 800 | 700 | 560 | 2 | 100 | deep |
| 2-7 | 2 | Na | low | 200 | 30 | IJ2K | 60.3 | 800 | 200 | 160 | 0 | 0 | picking |
| 20-2 | 20 | Na | medium | 1000 | 30 | IJ2K | 60.3 | 880 | 200 | 160 | 0 | 0 | picking |
| K-3 | K | K | high | 1000 | 30 | Wallpaper | 60.3 | 800 | 300 | 240 | 0 | 0 | picking |
| L-2 | L | K | high | 200 | 30 | IJ2K | 60.3 | 800 | 200 | 160 | 0 | 100 | shallow |
| 7-4 | 7 | K | low | 1000 | 30 | IJ2K | 60.3 | 800 | 250 | 200 | 0 | 100 | shallow |
| 2-5 | 2 | Na | low | 200 | 30 | IJ2K | 60.3 | 700 | 300 | 210 | 0 | 100 | shallow |
| 1-6 | 1 | K | low | 200 | 30 | Wallpaper | 60.3 | 900 | 250 | 225 | 0 | 100 | shallow |
| 2-3 | 2 | Na | low | 200 | 30 | IJ2K | 60.3 | 600 | 400 | 240 | 0 | 100 | shallow |
| 4-1 | 4 | Na | low | 200 | 40 | IJ2K | 60.3 | 800 | 300 | 240 | 0 | 100 | shallow |
| 8-2 | 8 | Na | low | 1000 | 30 | IJ2K | 60.3 | 800 | 300 | 240 | 0 | 100 | shallow |
| 14-1 | 14 | Na | medium | 200 | 30 | IJ2K | 60.3 | 800 | 300 | 240 | 0 | 100 | shallow |
| 15-2 | 15 | K | medium | 200 | 40 | IJ2K | 60.3 | 800 | 300 | 240 | 0 | 100 | shallow |
| F-1 | F | K | high | 200 | 30 | IJ2K | 60.3 | 800 | 300 | 240 | 0 | 100 | shallow |
| G-1 | G | K | high | 1000 | 30 | IJ2K | 60.3 | 800 | 400 | 320 | 0 | 100 | shallow |
| K-2 | K | K | high | 1000 | 30 | IJ2K | 60.3 | 800 | 300 | 240 | 0 | 90 | shallow |
| 16-2 | 16 | Na | medium | 200 | 40 | IJ2K | 60.3 | 800 | 200 | 160 | 0 | 80 | shallow |
| 1-2 | 1 | K | low | 200 | 30 | IJ2K | 60.4 | 800 | 250 | 200 | 0 | 80 | shallow |
| 4-3 | 4 | Na | low | 200 | 40 | IJ2K | 60.3 | 800 | 250 | 200 | 0 | 80 | shallow |
| 8-1 | 8 | Na | low | 1000 | 30 | IJ2K | 60.3 | 800 | 250 | 200 | 0 | 80 | shallow |
| 3-5 | 3 | K | low | 200 | 40 | IJ2K | 60.3 | 700 | 300 | 210 | 0 | 80 | shallow |
| 3-3 | 3 | K | low | 200 | 40 | IJ2K | 60.3 | 600 | 400 | 240 | 0 | 80 | shallow |
| 3-9 | 3 | K | low | 200 | 40 | IJ2K | 60.3 | 800 | 600 | 480 | 1 | 80 | shallow |
| 7-3 | 7 | K | low | 1000 | 30 | IJ2K | 60.3 | 800 | 200 | 160 | 0 | 50 | shallow |
| 15-3 | 15 | K | medium | 200 | 40 | IJ2K | 60.3 | 800 | 200 | 160 | 0 | 50 | shallow |
| 3-2 | 3 | K | low | 200 | 40 | IJ2K | 60.3 | 500 | 400 | 200 | 0 | 50 | shallow |
| 13-2 | 13 | K | medium | 200 | 30 | IJ2K | 60.3 | 800 | 300 | 240 | 0 | 50 | shallow |
| 2-1 | 2 | Na | low | 200 | 30 | IJ2K | 60.3 | 500 | 500 | 250 | 0 | 50 | shallow |
| 3-11 | 3 | K | low | 200 | 40 | IJ2K | 60.3 | 800 | 700 | 560 | 3 | 50 | shallow |
| 19-2 | 19 | K | medium | 1000 | 30 | IJ2K | 60.3 | 800 | 200 | 160 | 0 | 20 | shallow |
| 3-7 | 3 | K | low | 200 | 40 | IJ2K | 60.3 | 800 | 500 | 400 | 1 | 20 | shallow |
| 1-7 | 1 | K | low | 200 | 30 | Wallpaper | 60.3 | 900 | 200 | 180 | 0 | 10 | shallow |
| 2-8 | 2 | Na | low | 200 | 30 | IJ2K | 60.3 | 700 | 200 | 140 | 0 | 0 | |
| 2-9 | 2 | Na | low | 200 | 30 | Wallpaper | 60.3 | 800 | 200 | 160 | 0 | 0 | |

**TABLES. Formulations from Table 4 Leading to 100% Deep Fiber Tear Bond**

| Test | Counterion | Mw | Plasticizer | Plasticizer level | Energy (J) |
|---|---|---|---|---|---|
| 1-3 | K | low | 200 | 30 | 240 |
| 2-8 | Na | low | 200 | 30 | 240 |
| 3-6 | K | low | 200 | 40 | 240 |
| 7-2 | K | low | 1000 | 30 | 240 |
| 16-1 | Na | medium | 200 | 40 | 240 |
| 19-1 | K | medium | 1000 | 30 | 240 |
| 20-1 | Na | medium | 1000 | 30 | 240 |
| 1-1 | K | high | 200 | 30 | 240 |
| 3-1 | K | low | 200 | 40 | 250 |
| 2-4 | Na | low | 200 | 30 | 280 |
| 3-4 | K | low | 200 | 40 | 280 |
| 1-1 | K | low | 200 | 30 | 300 |
| 2-2 | Na | low | 200 | 30 | 300 |
| 4-2 | Na | low | 200 | 40 | 320 |
| 7-1 | K | low | 1000 | 30 | 320 |
| 8-3 | Na | low | 1000 | 30 | 320 |
| 13-1 | K | medium | 200 | 30 | 320 |
| 14-2 | Na | medium | 200 | 30 | 320 |
| 15-1 | K | medium | 200 | 40 | 320 |
| F-2 | K | high | 200 | 30 | 320 |
| K-1 | K | high | 1000 | 30 | 320 |
| G-2 | K | high | 1000 | 30 | 400 |

"Deep fiber tear" is a qualitative determination of how well the coated paper (which simulatesa label) bonded to the mating fiberboard substrate in the testing. This indicates a robust destructive bond as opposed to superficial surface fibers being picked off upon separation of the two bonded parts. The percentages reported are estimates of the observed bonded area as compared to the full activation zone.

The significance of these results as related to the formulations and testing conditions is that the ideal formulation will require the minimum amount of energy to achieve a 100% deep fiber tear bond. Looking to Tables4 and 5, it is clear that a variety of formulations achieve the desired bond at 2401. Further, looking to the main effects plot, (Figure 1), it becomes evident that the energy to bond was affected positively (less energy needed) as Mw decreases, plasticizer level increases, and of the PEG plasticizer decreases. Based on the foregoing discussion, Blend #3 represents a particular embodiment.

The polymers in Tables 4 and 5 are characterized as "high," "medium'" and "low" molecular weight. The molecular weight of the "high" Mw polymer was measured to be 396,000 Daltons with a polydispersity of 18.3. Subsequent to this measurement, the GPC (gel permeation chromatography) column was changed and therefore the measurements that follow cannot be directly compared to the values of the and "low" Mw values which were reported as 419,000 with a polydispersity of 9.7 and 293,000 with a polydispersity of 8.1 respectively. The "medium"' and "low" values can reliably be compared to one another since they were run on the same column with the same calibration standard, but neither can be directly compared to the "high" value. Also, these values only represent the soluble (in THF) portion of the polymer.

Figure 1 shows the relationships between activation energy and several key parameters in the processing of the adhesive. The "Mw" plot demonstrates that with decreased molecular weight the energy needed to activate the adhesive decreases. However, the slight difference between the 'medium" and "low" molecular weights indicates that below a certain molecular weight, there is little additional energy savings.

The "plasticizer" plot indicates plasticizer molecular weight as related to activation energy. A plasticizer with molecular weight is easier to activate than one with higher molecular weight, without regard to the amount of plasticizer.

The "plasticizer level" plot indicates plasticizer quantity as related to activation energy, A higher level of plasticizer used results in an adhesive that is easier to activate than an adhesive with a lower amount of plasticizer, without regard to the molecular weights of the plasticizers.

Finally, the counterion plot indicates activation energy as a function of counterion used. It is clear that the choice of counterion between Na⁺ and K⁺ little difference, however a slight energy savings is realized by the use of Na⁺.

## Claims

1. A RF activatable polymer blend comprising:
from 45 to 60 wt% of a base polymer comprising:
i. from 25 to 45 wt% of 2-ethyl hexyl acrylate;
ii. from 45 to 75 wt% of methyl methacrylate;
iii. from 1 to 5 wt% of methacrylic acid; and
iv. from 0.1 to 3 wt% of acrylic acid;
wherein the wt% of i. to iv. add to 100 wt%;
from 15 to 40 wt% of a polyethylene glycol plasticizer having a molecular weight of 100-1500 Daltons, wherein the molecular weight is determined by gel permeation chromatography; and
from 15 to 25 wt% of an aqueous tackifier dispersion.

2. The blend of claim 1, comprising:
from 46 to 58 wt% of the base polymer;
from 20 to 37 wt% of the polyethylene glycol plasticizer;
from 17 to 23 wt% of the aqueous tackifier dispersion.

3. The blend of claim 1 or 2, wherein the polyethylene glycol plasticizer has a molecular weight of from 150 to 1300 Daltons.

4. The blend of any one of claims 1 to 3, wherein the polyethylene glycol plasticizer has a molecular weight of from 200 to 1000 Daltons.

5. The blend of any one of claims 1 to 4, comprising:
from 47 to 57 wt% of the base polymer;
from 24 to 35 wt% of the polyethylene glycol plasticizer; and
from 18 to 22 wt% of the aqueous tackifier dispersion.

6. The blend of any one of claims 1 to 5, wherein the base polymer comprises:
from 30 to 40 wt% 2-ethyl-hexyl acrylate;
from 60 to 65 wt% methyl methacrylate;
from 1 to 3 wt% methacrylic acid; and
from 0.1 to 2 wt% acrylic acid.

7. A method of activating an RF activatable adhesive comprising:
providing a RF activatable polymer blend of any one of claims 1 to 6;
applying the blend to a generally planar substrate;
providing an RF generator including at least two generally linear electrodes;
orienting the generally planar substrate in an RF energy field produced by the RF generator; and
activating the blend by exposing the blend to RF energy from the RF generator.

8. The method of claim 7, wherein the generally planar substrate is oriented generally parallel to the at least two generally linear electrodes.

9. The method of claim 7 or 8, wherein the generally planar substrate is oriented generally perpendicular to the at least two generally linear electrodes.

## Patentansprüche

1. RF-aktivierbarer Polymerblend, umfassend:
von 45 bis 60 Gew.-% eines Basispolymers, umfassend:
i. von 25 bis 45 Gew.-% 2-Ethylhexylacrylat,
ii. von 45 bis 75 Gew.-% Methylmethacrylat,
iii. von 1 bis 5 Gew.-% Methacrylsäure, und
iv. von 0,1 bis 3 Gew.-% Acrylsäure,
wobei sich die Gew.-% von i. bis iv. auf 100 Gew.-% aufaddieren,
von 15 bis 40 Gew.-% eines Polyethylenglycol-Weichmachers mit einem Molekulargewicht von 100-1500 Dalton, wobei das Molekulargewicht durch Gelpermeationschromatographie bestimmt wird, und
von 15 bis 25 Gew.-% einer wässrigen Klebrigmacher-Dispersion.

2. Blend gemäß Anspruch 1, umfassend:
von 46 bis 58 Gew.-% des Basispolymers,
von 20 bis 37 Gew.-% des Polyethylenglycol-Weichmachers,
von 17 bis 23 Gew.-% der wässrigen Klebrigmacher-Dispersion.

3. Blend gemäß Anspruch 1 oder 2, wobei der Polyethylenglycol-Weichmacher ein Molekulargewicht von 150 bis 1300 Dalton aufweist.

4. Blend gemäß einem der Ansprüche 1 bis 3, wobei der Polyethylenglycol-Weichmacher ein Molekulargewicht von 200 bis 1000 Dalton aufweist.

5. Blend gemäß einem der Ansprüche 1 bis 4, umfassend:
von 47 bis 57 Gew.-% des Basispolymers,
von 24 bis 35 Gew.-% des Polyethylenglycol-Weichmachers,
von 18 bis 22 Gew.-% der wässrigen Klebrigmacher-Dispersion.

6. Blend gemäß einem der Ansprüche 1 bis 5, wobei das Basispolymer umfaßt:
von 30 bis 40 Gew.-% 2-Ethylhexylacrylat,
von 60 bis 65 Gew.-% Methylmethacrylat,
von 1 bis 3 Gew.-% Methacrylsäure,
von 0,1 bis 2 Gew.-% Acrylsäure.

7. Verfahren zum Aktivieren eines RF-aktivierbaren Haftmittels, umfassend:
das Bereitstellen eines RF-aktivierbaren Polymerblends gemäß einem der Ansprüche 1 bis 6,
das Aufbringen des Blends auf ein im Wesentlichen planares Substrat,
das Bereitstellen eines RF-Generators, der mindestens zwei im Wesentlichen lineare Elektroden einschließt,
das Orientieren des im Wesentlichen planaren Substrats in einem RF-Energiefeld, erzeugt durch den RF-Generator,
das Aktivieren des Blends durch Aussetzen des Blends RF-Energie von dem RF-Generator.

8. Verfahren gemäß Anspruch 7, wobei das im Wesentlichen planare Substrat im Wesentlichen parallel zu den mindestens zwei im Wesentlichen linearen Elektroden orientiert ist.

9. Verfahren gemäß Anspruch 7 oder 8, wobei das im Wesentlichen planare Substrat im Wesentlichen senkrecht zu den mindestens zwei im Wesentlichen linearen Elektroden orientiert ist.

## Revendications

1. Mélange polymère activable par RF, comprenant :
de 45 à 60% en poids d'un polymère de base comprenant :
i. de 25 à 45% en poids d'acrylate de 2-éthylhexyle ;
ii. de 45 à 75% en poids de méthacrylate de méthyle ;
iii. de 1 à 5% en poids d'acide méthacrylique ; et
iv. de 0,1 à 3% en poids d'acide acrylique ;
où les % en poids de i. à iv. s'additionnent pour faire 100% en poids ;
de 15 à 40% en poids de plastifiant polyéthylèneglycol ayant un poids moléculaire allant de 100 à 1500 Dalton, où le poids moléculaire est déterminé par chromatographie de perméation sur gel, et
de 15 à 25% en poids d'une dispersion aqueuse de tackifiant.

2. Mélange selon la revendication 1, comprenant :
de 46 à 58% en poids du polymère de base ;
de 20 à 37% en poids du plastifiant polyéthylèneglycol ;
de 17 à 23% en poids de la dispersion aqueuse de tackifiant.

3. Mélange selon la revendication 1 ou 2, où le plastifiant polyéthylèneglycol présente un poids moléculaire allant de 150 à 1300 Dalton.

4. Mélange selon l'une quelconque des revendications 1 à 3, où le plastifiant polyéthylèneglycol présente un poids moléculaire allant de 200 à 1000 Dalton.

5. Mélange selon l'une quelconque des revendications 1 à 4, comprenant :
de 47 à 57% en poids du polymère de base ;
de 24 à 34% en poids du plastifiant polyéthylèneglycol ; et
de 18 à 22% en poids de la dispersion aqueuse de tackifiant.

6. Mélange selon l'une quelconque des revendications 1 à 5, où le polymère de base comprend :
30 à 40% en poids d'acrylate de 2-éthylhexyle ;
60 à 65% en poids de méthacrylate de méthyle ;
1 à 3% en poids d'acide méthacrylique, et
0,1 à 2% en poids d'acide acrylique.

7. Procédé d'activation d'un adhésif activable par RF, comprenant :
la mise à disposition d'un mélange polymère activable par RF selon l'une quelconque des revendications 1 à 6 ;
l'application du mélange sur un substrat généralement plan ;
la mise à disposition d'un générateur de RF comprenant au moins deux électrodes généralement linéaires ;
l'orientation du substrat plan dans un champ de RF produit par le générateur de RF, et
l'activation du mélange par exposition de celui-ci à l'énergie de RF produite par le générateur de RF.

8. Procédé selon la revendication 7, où le substrat généralement plan est orienté de manière généralement parallèle aux au moins deux électrodes généralement linéaires.

9. Procédé selon la revendication 7 ou 8, où le substrat généralement plan est orienté de manière généralement perpendiculaire aux au moins deux électrodes généralement linéaires.
